# EUROPÄISCHE PATENTANMELDUNG

(11) **EP 4 415 202 A1**
(43) Veröffentlichungstag der Anmeldung: **14.08.2024**
(21) Anmeldenummer: 23156105.1
(22) Anmeldetag: 10.02.2023
(51) Int. Cl.: H02J 3/38, H02J 13/00

(54) **COMPUTERIMPLEMENTIERTES VERFAHREN, NETZANALYSEANORDNUNG UND COMPUTERPROGRAMMPRODUKT**

(71) Anmelder: Siemens Aktiengesellschaft, 80333 München (DE)
(72) Erfinder: LOZICZKY, Sebastian, 1180 Wien (AT); PALKOVITS, Martin, 1020 Wien (AT); REJC, Matej, 1210 Wien (AT); OMAN, Alexander, 1170 Wien (AT)
(74) Vertreter: Siemens Patent Attorneys

(57) **Zusammenfassung**

Gegenstand der vorliegenden Erfindung ist ein computerimplementiertes Verfahren für eine Netzanalyse eines elektrischen Energienetzes (1,32) mit mindestens einem Energieübertragungsnetz und mindestens einem Energieverteilungsnetz (35,51), wobei das mindestens eine Energieübertragungsnetz (53,54) eine höhere Nennspannung als das mindestens eine Energieverteilungsnetz (35,51) aufweist, mit den Schritten:
Bestimmen eines Netzzustands mittels einer Netzanalyseanordnung unter Berücksichtigung eines Netzaufteilungsdatensatzes, wobei der Netzaufteilungsdatensatz eine Zuordnung von Leitungen und/oder Betriebsmitteln zu dem mindestens einen Energieübertragungsnetz (53,54) und dem mindestens einen Energieverteilungsnetz (35,51) bereitstellt,
dadurch gekennzeichnet, dass
vor der Bestimmung des Netzzustands mittels einer Netzaufteilungseinrichtung anhand eines Topologiedatensatzes des elektrischen Energienetzes (1,32) eine Aufteilung des elektrischen Energienetzes in das mindestens eine Energieübertragungsnetz (53,54) und das mindestens eine Energieverteilungsnetz (35,51) in dem Netzaufteilungsdatensatz bereitgestellt wird.

Ferner sind Gegenstände der vorliegenden Erfindung eine entsprechende Netzanalyseanordnung und ein entsprechendes Computerprogrammprodukt.

## Beschreibung

Die vorliegende Erfindung betrifft ein Computerimplementiertes Verfahren gemäß dem Oberbegriff des Anspruchs 1, eine Netzanalyseanordnung gemäß dem Oberbegriff des Anspruchs 8 und ein Computerprogrammprodukt gemäß Anspruch 15.

Energienetze für elektrische Energie müssen mittels eines Netzleitsystems, üblicherweise in einer Netzleitstelle angeordnet, gemanagt werden. Elektrische Energienetze müssen aufgrund der zunehmenden Nutzung von erneuerbaren Energien wie z.B. Windkraftanlagen oder Photovoltaikanlagen ständig flexibler, leichter wartbar und/oder ausbaubar werden. Ferner sollte der Betrieb optimiert werden, indem beispielswiese im Betrieb näher an zulässigen Grenzbedingungen für Betriebsmittel gearbeitet wird. Das Netz sollte so gesteuert werden, dass Übertragungsverluste und Engpässe bzw. Notfallmaßnahmen minimiert werden.

Darüber hinaus erfordert die sognannte Sektorenkopplung mehr und mehr Schnittstellen zwischen den bisher oftmals getrennt gemanagten Energienetzen für z.B. Wärme und Gas.

Die erste Generation von Netzleitsystemsoftware für die Netzleitstelle wurde in den 1970er Jahren entwickelt. Sie nutzt speziell für diese Anwendung konfigurierte Server-Computer, die im Computerraum der Leitstelle des Netzbetreibers vor Ort installiert wurden. Dabei wurden die Server-Computer typischerweise redundant ausgeführt, um eine Verfügbarkeit der Netzleitsystemfunktionalität von mehr als 99,999 % der Zeit sicherzustellen. Teilweise werden auch heutzutage die redundanten Server-Computer an unterschiedlichen Orten installiert, um das Gesamtsystem noch resistenter zu gestalten und z.B. auch Katastrophen wie Erdbeben oder Feuer an einem Ort noch eine Leitstellenfunktionalität durch die Server-Computer am anderen Ort sicherzustellen.

Aus der Produktbroschüre "Intelligent control center technology - Spectrum Power", Siemens AG 2017, Article-No. EMDG-B90019-00-7600, ist eine Software für ein sog. "Supervisory Control and Data Acquisition (SCADA)" System für den Einsatz in einer Leitstelle bekannt. SCADA Systeme sind zur Kontrolle und Steuerung von Energienetzen lange bekannt (Wikipedia permanenter link: https://en.wikipedia.org/w/index.php?title=SCADA&oldid=858433 181). Dabei werden Messwerte von Sensoren, beispielsweise von Spannungsmessgeräten und Strommessgeräten im Energienetz, aggregiert und zur Leitstelle übermittelt. Zur Steuerung von Leistungsschaltern, Stufenstellern von Transformatoren, Trennschaltern und anderen steuerbaren Betriebsmitteln im Energienetz sowie zur Ansteuerung von Energieerzeugern wie Kraftwerken werden Steuerbefehle ins Energienetz gesendet. Diese Steuerbefehle werden von "Remote Terminal Units" (RTUs), "programable logic controllers" (PLCs) und "intelligent electronic devices" (IEDs) empfangen und verarbeitet, um die Leistungsschalter, die Trennschalter usw. anzusteuern. In der Leitstelle ist bisher häufig ein lokales Rechenzentrum vorgesehen, auf dem die Leitstellensoftware wie z.B. Spectrum Power läuft. Die Leitstellensoftware wird in der Regel in einer zentralen Rechneranordnung betrieben, die beispielsweise als ein Rechenzentrum mit Prozessoren, Datenspeichern und Bildschirmen ausgebildet sein kann. Der Begriff "zentral" zielt dabei darauf ab, dass alle Messdaten aus dem Energienetz und alle Steuerbefehle für das Energienetz zentral verarbeitet werden. Es werden rund um die Uhr Techniker in der Leitstelle bereitgehalten, die die Anzeigen des SCADA über den aktuellen Betriebszustand des Energienetzes kontrollieren und im Fehlerfall Gegenmaßnahmen wie z.B. die Abschaltung eines Netzabschnitts durchführen können.

Auch eine teilweise oder vollständige Ausbildung der RechnerAnordnung bzw. der Leitstellensoftware als eine Cloud-Applikation, also eine Serveranordnung mit dezentral verteilten Ressourcen zur Datenverarbeitung und Datenspeicherung, die über ein Datennetzwerk wie z.B. das Internet verbunden sind, kann vorgenommen werden.

Als Begleiterscheinung einer immer weiteren Verbreitung von verteilter Energieerzeugung, also beispielsweise durch Photovoltaik-Anlagen oder Windkraftanlagen, wird durch die immer zahlreicheren lokalen Energieerzeuger, die in das Nieder- und Mittelspannungsnetz einspeisen, eine Ermittlung eines Systemzustands des Energienetzes erschwert. Insbesondere eine Erfassung des aktuellen Zustandes in den unteren Spannungsebenen (Mittel und Niederspannung) wird immer wichtiger, weil die Netze in den unteren Spannungsebenen durch die dezentralen Einspeisungen stärker belastet werden. Zusätzlich zu den Lastprofilen müssen z.B. jetzt auch Wind und Photovoltaik-Einspeisung berücksichtigt werden.

All diese Faktoren erschweren neben der Ermittlung des aktuellen Netzzustands auch eine Vorhersage des zukünftigen Netzzustands.

Die Abhängigkeit von Wettereinflüssen steigt, weil z.B. Solarzellen stark von der Bewölkung und Windkraftanlagen von der Windstärke beeinflusst werden. Diese Probleme wirken auch auf die nächsthöhere Spannungsebene - eines Energieübertragungsnetzes der Hochspannungsebene - zurück, das hierdurch schwieriger zu steuern und vorherzusagen ist.

Bisher werden in der Regel Last- und Erzeugungsprognosen und/oder Fahrpläne in Verbindung mit einem sog. "Distribution System Power Flow (DSPF)" eingesetzt, um einen zukünftigen Netzzustand abzuschätzen. Dabei verwendet DSPF statische Betriebsmitteldaten, lokalen Vorhersagen für einen Energieverbrauch und eine Energieerzeugung sowie dynamische Topologie-Informationen (d.h. welche Leitungen zwischen den einzelnen Komponenten aktuell geschaltet sind), um einen prognostizierten Spannungsbetrag und Spannungswinkel an jedem Netzwerkabschnitt zu berechnen. Dabei kann einerseits eine Zustandsschätzung ("state estimation") für den aktuellen Zustand und andererseits eine Prognose bzw. Netzberechnung für zukünftige Zustände (z.B. Lastflüsse) erfolgen. Die aktuelle Zustandsschätzung verwendet als Eingangsgröße auch fehlerbehaftete Messwerte, wobei die Schätzung im Hochspannungsnetz jedoch überbestimmt ist. Eine Lastflussberechnung arbeitet mit Fahrplänen/Prognosen und hat keine überbestimmten Inputdaten. Für "Prognose" (z.B. Windprognosen) für den aktuellen Zustand wird manchmal auch der Begriff "Now-cast" verwendet.

Ein Ansatz ist beispielsweise aus der Produktbroschüre "Spectrum Power Aktives Netzwerkmangement", Siemens AG 2016, EMFG-B10104-00, bekannt. Die technischen Grundlagen sind aus den Veröffentlichungen "Real-Time Distribution System State Estimation" von Dzafic et al., 2010 IEEE 978-1-4244-7398-4 und "Real-Time Estimation of Loads in Radial and Unsymmetrical Three-Phase Distribution Networks" von Dzafic et al., 2013 IEE 0885-8950, bekannt.

Ferner werden zur Überwachung und Kontrolle von Energieverteilnetzwerken, insbesondere der Niederspannungsebene, sog. "Digital Substations" eingesetzt, also Unterwerke mit eigener Rechnerkapazität zur Datenerfassung und Auswertung, eingesetzt. Die Einbindung eines solchen Unterwerks in ein SCADA System ist beispielsweise aus der Veröffentlichung "Digital substations with the Future built in", Siemens AG 2017, Article-No. EMDG-B10130-00-7600, von Seite 5 bekannt.

Das Bedienpersonal in einer Leitstelle für ein elektrisches Energienetz benötigt eine Software für eine Auswertung von Messdaten, so dass mittels einer Netzanalyse z.B. ein Netzzustand bestimmt werden kann. Dabei sind für das typischerweise vermaschte Übertragungsnetz der Hochspannungs- oder Mittelspannungsebene in der Regel Messdaten wie Spannung, Stromstärke, Wirkleistung, Blindleistung und ggf. Phasenwinkel für eine Vielzahl von Messpunkten erfassbar. Oft sind die Messdaten sogar redundant vorhanden, so dass eine hohe Genauigkeit und Verlässlichkeit der Messdaten erzielt wird.

Im Verteilnetz dagegen, das typischerweise der der Niederspannungsebene und teilweise auch der Mittelspannungsebene zugeordnet ist, sind oftmals unabhängige Teilnetze mit radialer Struktur vorgesehen, die nicht umfänglich mit Messeinrichtungen überwacht werden. Es können jedoch zusätzliche Daten von z.B. Intelligenten Stromzählern (d.h. per Internet fernauslesbaren Geräten), berücksichtigt werden.

Bisher werden getrennte Zustandsschätzungen für die verschiedenen Teilnetze erstellt. Beispielsweise ist aus der Broschüre "Spectrum Power 7 v2.30 SP2 Transmission Network Applications Application Sheet" (im Folgenden TNA genannt), Siemens AG 2021, AS-TNA-EN, Edition 07.2021, eine Software zur Datenfassung in einem Übertragungsnetz und zur Steuerung dieses Übertragungsnetzes bekannt. Dabei wird das unterlagerte Verteilnetz mit niedrigerer Nennspannung nicht beachtet, d.h. es werden keine Wechselwirkungen mit diesem Netz berücksichtigt.

Ferner ist aus der Produktbroschüre "Spectrum Power 7 v2.30 SP2 Distribution Network Applications Application Sheet" (im Folgenden DNA genannt), Siemens AG 2021, AS-DNA-EN, Edition 07.2021, eine Software zur Datenfassung in einem Verteilnetz und zur Steuerung dieses Verteilnetzes bekannt. Dabei wird das übergeordnete Übertragungsnetz mit höherer Nennspannung nicht beachtet, d.h. es werden keine Wechselwirkungen mit diesem Netz berücksichtigt.

Im Wesentlichen ergeben sich für die Betreiber von Netzleitstellen damit verschiedene Möglichkeiten, um Netze der Verteilebene und der Transport- bzw. Übertragungsebene für eine Zustandsschätzung zu erfassen.

Einerseits kann jeweils nur TNA oder DNA eingesetzt werden, um das Verteilnetz oder das Übertragungsnetz einzeln zu beobachten.

Andererseits können beide Softwareprodukte, DNA und TNA, gemeinsam eingesetzt werden. Dies hat jedoch den Nachteil, dass beide Produkte unterschiedliche Datenmodelle verwenden und nicht miteinander synchronisiert sind. Entsprechend erhält ein Leitstellentechniker von jedem der Tools ein separates Ergebnis, bei dem Wechselwirkungen der Netze unterschiedlicher Spannungsebenen weitgehend unberücksichtigt bleiben.

Eine Netzanalyse eines elektrischen Energienetzes beginnt typsicherweise mit einer Zustandsschätzung, auf deren Basis eine Berechnung von Leistungsflüssen erfolgt. Ferner können weitere Aspekte wie optimale Leistungsflüsse, Störungserkennung (tatsächliche oder potentielle Grenzwertverletzungen elektrischer Gröpen) und Gegenmaßnahmen, Fehlerortung usw. berechnet werden.

Inzwischen sind erste Ansätze bekannt, Übertragungsnetze und Verteilnetze gemeinsam für eine Netzanalyse zu berücksichtigen, so dass Bedienpersonal in einer Leitstelle nicht mehr zwischen der Nutzung verschiedener Softwarelösungen hin- und herwechseln muss. Dies hat den weiteren Vorteil, dass Wechselwirkungen zwischen den verschiedenen Spannungsebenen für die Zustandsschätzung berücksichtigt werden können. Beispielsweise können Schaltvorgänge so übergreifend über die unterlagerten Teilnetze und das übergeordnete Transportnetz bzw. Übertragungsnetz überwacht und sicher durchgeführt werden.

Beispielsweise ist die Veröffentlichung "Global state estimation for whole transmission and distribution networks" von Suna und Zhanga, veröffentlicht 2005 in "Electric Power Systems Research 74", Seiten 187-195, bekannt. Dabei wird eine feste Auftrennung zwischen einem oder mehreren Verteilnetzen und einem Transportnetz angenommen. Dieser Fall trifft in der Realität nur dann ein, wenn die Topologie der Netze im Betrieb unverändert bleibt und z.B. Übergabepunkte zwischen den Netzen stets gleich bleiben.

Ausgehend von dem bekannten computerimplementierten Verfahren für eine Netzanalyse stellt sich an die Erfindung die Aufgabe, ein computerimplementiertes Verfahren anzugeben, mit dem auch bei einer dynamischen Veränderung der Netztopologie im elektrischen Energienetz eine Zustandsschätzung mit verbesserter Genauigkeit ermöglicht wird.

Die Erfindung löst diese Aufgabe durch ein Verfahren gemäß Anspruch 1.

Ein wesentlicher Vorteil der Erfindung besteht darin, dass nicht wie bisher nur eine statische Trennung von Verteilnetz und Übertragungsnetz bzw. Transportnetz für eine gemeinsame Zustandsschätzung des Energienetzes verarbeitet werden können, sondern auch im laufenden Betrieb auftretende Änderungen, also dynamische Änderungen, der Topologie betrachtet werden können. Beispielsweise ändert sich die Topologie des Energienetzes dynamisch, wenn zwei Verteilnetze der Niederspannungsebene (z.B. in Österreich maximal 400V) durch Schließen eines Schalters zwischen zwei radialen Zweigen der jeweiligen Verteilnetze zu einem einzigen Verteilnetz zusammengeschaltet werden. Erfindungsgemäß kann mittels der Netzanalyseanordnung nun jeweils vor der Zustandsschätzung für das gesamte System jeweils eine Netzaufteilung in Verteil- und Übertragungsnetze bestimmt werden, was die Genauigkeit der Zustandsschätzung erhöht.

Im Ergebnis wird mittels des erfindungsgemäßen Verfahrens ein Energieübertragungsnetz und eines oder mehrere Energieverteilungsnetze ermittelt sowie Übergabepunkte zwischen den Energienetzen bestimmt.

Das gleiche Prinzip einer dynamischen Aufteilung des gesamten Energienetzes nach Spannungsebenen (DNA und TNA) kann mit Vorteil auch für eine weitergehende Netzanalyse zur Bestimmung optimaler Leistungsflüsse und/oder Störungserkennung und/oder Fehlerortbestimmung eingesetzt werden. Dabei muss nur noch ein einheitliches Datenmodell für das Übertragungsnetz und das Verteilnetz eingesetzt werden, was Entwicklungsaufwände und update-Erfordernisse verringert. Das einheitliche Datenmodell kann beispielsweise auf dem internationalen CIM Standard IEC 61970-301 aufbauen. Als Anpassungen an die Anwendung für die Erfindung kann der Standard dahingehend erweitert werden, dass abstrakte Klassen zusammengefasst, exotische Klassen ohne Bedeutung für die erfindungsgemäße Netzanalyse weggelassen und Typen für dynamische Ergebnisse hinzugefügt werden.

Ferner wird durch die erfindungsgemäße einheitliche Datenverarbeitung die Beobachtbarkeit des Netzes und infolge auch die Netzführung sowie Vorausberechnungen für das Netz verbessert. Es sind dadurch weniger Notmaßnahmen notwendig.

Für die Zustandsschätzung kann beispielsweise zunächst mittels einer Software für "transmission system state estimation" (TSSE) ein Netzzustand des übergeordneten Energieübertragungsnetzes bestimmt werden. Dieser Netzzustand des Energieübertragungsnetzes kann ein Input in Form von sog. "pseudo-Messwerten" für eine "distribution system state estimation" (DSSE) verwendet werden, um auch den Netzzustand der untergeordneten Energieverteilungsnetze zu bestimmen. Auf diese Weise können jeweils mit TSSE und DSSE für die jeweilige Spannungsebene optimierte Zustandsschätzungsverfahren eingesetzt werden.

Bisher kann es vorkommen, dass die DSSE Software für einige Verteilnetze oder Verteilnetzbereiche nicht auf einen Netzzustand konvergiert. Ein weiterer Vorteil der Erfindung besteht in diesem Fall darin, dass unabhängig davon ein konvergierter Netzzustand für das Übertragungsnetz ermittelt werden kann. Gleiches gilt für weitere Verteilungsnetze, da deren Netzzustandsschätzung unabhängig gerechnet wird.

Ein computerimplementiertes Verfahren im Sinne der Erfindung ist eine Abfolge von Schritten, die in Software oder anwendungsspezifischer Hardware ausgebildet sind und automatisiert oder teilautomatisiert von einem Computer verarbeitet werden können. Sind die Schritte in Software ausgebildet, bilden sie in kompilierter (d.h. maschinenausführbarer) Form ein Computerprogrammprodukt. Das Computerprogrammprodukt kann auf einem Computer, beispielsweise einem Rechner mit einem Prozessor, einer Grafikkarte, Eingabemitteln für Daten und Befehle sowie einer Anzeigeeinrichtung wie z.B. einem Monitor und einem Datenspeicher wie z.B. einer Festplatte (SSD, HDD), ausgeführt werden. Der Begriff Anordnung oder Netzanalyseanordnung bezeichnet in diesem Zusammenhang einen oder mehrere Computer, die ausgebildet sind, das Computerprogrammprodukt auszuführen.

Beispielswiese kann es sich bei der Netzanalyseanordnung um ein System von Computern in einer Netzleitstelle handeln - dort werden typischerweise Zustandsschätzungen der zu steuernden Energienetze benötigt. Alternativ kann es sich in Gänze oder zum Teil um eine Cloudeinrichtung handeln, bei der die Software in einem oder mehreren Rechenzentren mit einer Vielzahl von Datenspeicher- und Datenprozessorressourcen verwendet wird, die über eine Datenkommunikationsnetzwerk wie z.B. das Internet verbunden sind. Software kann dabei modulweise als sog. Cloud-Applikation dort ausgeführt werden, wo gerade ausreichende Datenprozessor- und/oder Datenspeicherressourcen zur Verfügung stehen. Dies gewährleistet eine hohe Skalierbarkeit und Verfügbarkeit.

Zudem entfällt für viele Unternehmen im Wesentlichen die Notwendigkeit, eigene Server-Computer bzw. Hardware im großen Umfang zu betreiben, zu warten und gegen Hackerangriffe zu schützen. Darüber hinaus müssen Netzleitsystem so dimensioniert sein, dass sie extrem große Datenmengen, wie sie z.B. bei Störungen im Energienetz entstehen, ohne Datenverlust verarbeiten können. Das bedeutet, dass die Rechenressourcen im Normalbetrieb nur zu einem Teil ausgelastet sind, was sowohl ökonomisch als auch ökologisch ineffizient ist.

Die Netzanalyseanordnung ist im Sinne der Erfindung ausgebildet, eine Leitstellensoftware betreiben, mit der Messdaten und Schaltzustände des Energienetzes empfangen, weiterverarbeitet und daraus abgeleitete Steuerbefehle für steuerbare Betriebsmittel wie Schaltanlagen, Stufenschalter von Transformatoren, Netzregler, steuerbare elektrische Energieverbraucher, steuerbare Produzenten elektrischer Energie, Kondensatorbänke, usw. gesendet werden. Auf diese Weise wird das Energienetz überwacht und kontrolliert, um z.B. die Netzspannung und die Netzfrequenz in den erlaubten Grenzen zu halten. Basierend auf dem Netzzustand werden Steuerbefehle erstellt, um Störungen im Energienetz zu vermeiden und die Verfügbarkeit zu erhöhen. Der Aspekt der Steuerung des Energienetzes kann auch durch eine separate Kontrollanordnung, d.h. ein klassisches Netzleitsystem, im Zusammenspiel mit der Netzanalyseanordnung übernommen werden.

Einrichtungen im Sinne der Erfindung sind in Software oder Hardware ausgebildete Komponenten der o.g. Anordnung, die jeweils einen oder mehrere Schritte ausführen können. Es kann sich beispielsweise um einzelne Computer oder Server handeln, die jeweils z.B. über vergleichbare Datenspeicher- und Datenprozessorressourcen wie eingangs für die Cloud-Infrastruktur erläutert verfügen.

Ein Energienetz weist z.B. ein elektrisches Energieversorgungsnetz der Niederspannungsebene auf, das eine Nennspannung von z.B. maximal 400V aufweist sowie ein Mittelspannungsnetz mit z.B. maximal 20 kV Nennspannung. Dies kann im Sinne der Erfindung als ein Energieverteilungsnetz betrachtet werden.

Sind mehrere Niederspannungsnetze bzw. Mittelspannungsnetze vorhanden, werden diese auch als Verteilnetzsubnetze bezeichnet. Das Energieversorgungsnetz der Niederspannungsebene ist z.B. über einen Transformator an das Mittelspannungsnetz angebunden, das wiederrum an ein Hochspannungsnetz zur Energieübertragung mit einer Nennspannung von über 20 kV angebunden ist. Hochspannungsnetze werden im Sinne der Erfindung als Energieübertragungsnetze bezeichnet, wobei es mehrere Übertragungssubnetze geben kann. Vermaschte, voll beobachtbare Netzbereiche werden im Sinne der Erfindung als Energieübertragungsnetze bezeichnet. Dies gilt üblicherweise für Hochspannungsnetze und manchmal auch für Teile des Mittelspannungsnetzes.

Eine Netzanalyse eines elektrischen Energienetzes umfasst beispielsweise eine Zustandsschätzung, so dass die Stabilität des Energienetzes und das Auftreten von Störungen überwacht werden können. Eine Störung ist beispielsweise eine Verletzung zulässiger Spannungsgrenzen (z.B. mehr als +/- 10 % der vorgesehenen Nennspannung). Auch eine Abweichung von der vorgesehenen Netzfrequenz (i.d.R. 50 Hz) kann eine Störung darstellen. Ferner können auch Stromgrenzwerte oder Leistungsgrenzwerte verletzt werden.

Der Netzaufteilungsdatensatz ist beispielsweise als eine Datei oder Datenbank ausgebildet, in der eine Zuordnung von Leitungen und/oder Betriebsmitteln zu dem mindestens einen Energieübertragungsnetz und dem mindestens einen Energieverteilungsnetz abgespeichert ist.

Ein Topologiedatensatz des elektrischen Energienetzes stellt beispielsweise Informationen zum Aufbau und zur Verschaltung des gesamten Energienetzes zur Verfügung. Enthalten sein können z.B. Informationen zur Verschaltung von Leitungen, Generatoren, Verbrauchern, Transformatoren, Netzreglern, Schutzgeräten, Schalteinrichtungen, Messgeräten für Spannung, Stromstärke und Phasenwinkel sein. Auch Messwerte an den Messstellen der Messgeräte können enthalten sein, z.B. Spannung, Stromstärke und Phasenwinkel.

In einer bevorzugten Ausführungsform des erfindungsgemäßen computerimplementierten Verfahrens stellt der Netzzustand mindestens eine der folgenden Informationen über das Energienetz bereit: Zustandsschätzung, Leistungsflüsse, Optimierte Leistungsflüsse, Analyse von Störungen und Gegenmaßnahmen, Erkennung von Fehlerorten im Energienetz. Dies ist ein Vorteil, weil anhand des Netzzustands eine Steuerung von Erzeugern elektrischer Energie (Generatoren, z.B. Kraftwerken), Verbrauchern und steuerbaren Betriebsmitteln (z.B. Schalteinrichtungen, Transformatoren und Netzregler) erfolgen kann, um das Netz stabil und störungsfrei zu halten.

Ferner kann auch eine sog. "Redispatch optimization" durchgeführt werden.

In einer weiteren bevorzugten Ausführungsform des erfindungsgemäßen computerimplementierten Verfahrens beschreibt der Topologiedatensatz das elektrische Energienetz anhand von Kanten als elektrische Leitungen und Knoten als Generatoren und/oder Lasten. Dies ist eine besonders einfache Beschreibung einer Topologie, da als wesentlicher Faktor die Verbindungen zwischen den Komponenten hervorgehoben werden. Ferner können auch Transformatoren und/oder Shunts im Topologiedatensatz beschrieben sein.

In einer weiteren bevorzugten Ausführungsform des erfindungsgemäßen computerimplementierten Verfahrens werden mittels der Netzaufteilungseinrichtung anhand des Topologiedatensatzes Netzbereiche im Energienetz derart erkannt, dass
für jeden Netzbereich Leitungen und/oder Lasten und/oder Generatoren, deren Nennspannung unterhalb eines vorher festgelegten Schwellenwertes für die Nennspannung liegen, einem vorläufigen Energieverteilungsnetz zugeordnet werden, und Leitungen und/oder Lasten und/oder Generatoren, deren Nennspannung oberhalb des vorher festgelegten Schwellenwertes für die Nennspannung liegen, einem vorläufigen Energieübertragungsnetz zugeordnet werden. Dies ist ein Vorteil, weil eine einfache vorläufige Zuordnung zu den verschiedenen Spannungsebenen erfolgen kann. Das vorläufige Energieübertragungsnetz wird anschließend entweder dem Energieübertragungsnetz zugeordnet oder es wird ein neues Energieverteilungsnetz im Datensatz erzeugt.

Beispielsweise kann eine maximale Spannung von 20 kV als vorher festgelegter Schwellenwert genutzt werden.

Es kann als weiteres Kriterium für die Aufteilung des Energienetzes ein Niveau einer Beobachtbarkeit gewählt werden. Dabei wird derjenige Teil des Netzes, der typisch für ein Übertragungsnetz ausgebildet ist, d.h. ein höheres Spannungsniveau aufweist, eine vermaschte Struktur und volle Beobachtbarkeit mit Messeinrichtungen für Strom, Spannung und/oder Phasenwinkel, als Energieübertragungsnetz identifiziert. Typischerweise gibt es ein Energieübertragungsnetz pro elektrischen Netzbereich, wobei es i.d.R. auch nur einen elektrischen Netzbereich und damit auch nur ein Energieübertragungsnetz gibt. Netzbereiche sind elektrisch verbunden. Im Gegensatz dazu sind elektrische Inseln sind elektrisch nicht verbunden. D.h. es werden innerhalb der elektrischen Inseln die elektrischen Subnetze bzw. Netzbereiche erkannt.

Die Teile des Netzes, die typische Verteilnetzeigenschaften wie z.B. Mittel- und Niederspannungsniveaus, teilweise nicht-Beobachtbarkeit, radiale Struktur oder Vorliegen von Strommessdaten und anderen verschiedene Eingangsdaten (Pseudomessungen, historische Daten, Last/Erzeugungskurvendaten) aufweisen, werden als Verteilungssubsysteme identifiziert (in der Regel gibt es mehrere Verteilungssubsysteme in Energieverteilungsnetz). Für jeden dieser beiden charakteristischen Subsystemtypen können optimierte Algorithmen verwendet werden. Daher wird ein Übertragungsnetzzustandsschätzer für Übertragungssubsysteme und ein Verteilungssystemzustandsschätzer für Verteilungssubsysteme eingesetzt.

In einer weiteren bevorzugten Ausführungsform des erfindungsgemäßen computerimplementierten Verfahrens wird das vorläufige Energieverteilungsnetz anhand mindestens eines Bewertungskriteriums als Energieverteilungsnetz verifiziert, wobei das mindestens eine Bewertungskriterium mindestens eines der folgenden Bewertungskriterien umfasst: Anzahl der Sammelschienen, Anzahl der Lasten, Anzahl sequenzieller Zweige bzw. Äste, minimaler elektrischer Widerstand von Ästen im vorläufigen Energieverteilungsnetz, Anzahl radialer Äste, elektrische Nennspannung, Anzahl vorliegender Messungen. Dabei bezeichnen radiale Äste im Sinne der Erfindung sequenziell verbundene Äste. Dies ist ein Vorteil, weil anhand von Bewertungskriterien eine Bestätigung der vorläufigen Zuordnung zu den verschiedenen Spannungsebenen durchgeführt werden kann.

Beispielsweise kann ein Schwellenwert für die Anzahl von Sammelschienen im Energieverteilungsnetz auf 5 gesetzt sein. Die minimale Anzahl der Lasten kann 1 sein. Der minimale elektrische Widerstand von Ästen im vorläufigen Energieverteilungsnetz kann auf 0,5 Ω festgelegt werden. Eine minimale Anzahl von sequenziellen Zweigen bzw. Ästen kann auf 3 festgelegt werden. Eine minimale Anzahl an vorliegenden Messungen kann beispielsweise eine Strommessung oder eine Kombination aus einer Wirkleistungs- und einer Blindleistungsmessung umfassen.

In einem anderen Ausführungsbeispiel für ein spanisches Energienetz zeigte sich folgender Parametersatz als geeignet für eine Netzaufteilung mit dem erfindungsgemäßen Ansatz:
- Maximal 20 kV Spannung im Verteilnetz
- Mindestens 5 Sammelschienen
- Mindestens 1 Last
- minimaler elektrischer Widerstand von Ästen im vorläufigen Energieverteilungsnetz: 0,5 Ω (kann als Kriterium außer acht gelassen werden im konkreten Beispiel in Spanien)
- Mindestens 3 sequenzielle Zweige
- Mindestens 1 Strommessung oder eine Kombination von Wirkleistung und Blindleistung.

Die Spannung für die Basistrennung ist im Beispiel mit 20kV relativ niedrig. Das kann für andere Netze abweichen und beispielsweise bis zu 52 kV betragen.

Der Algorithmus zur globalen Zustandsschätzung wird beispielsweise wie folgt ausgeführt:
1) Zur Lösung der Übertragungsteilsysteme wird ein Transmission System State Estimator (TSSE) verwendet.
2) Die Ergebnisse der TSSE an den Übergabepunkten werden als Pseudo-Messinput für den Zustandsschätzer des Verteilungssystems verwendet.
3) Für das Verteilungssubsystem wird ein Verteilungssystemzustandsschätzer (DSSE) verwendet.

Die jeweiligen Algorithmen sind dabei für den jeweiligen Subsystemtyp optimiert.

Neben den optimierten Algorithmen hat die angepasste Aufteilung auch den Vorteil, dass, wenn die DSSE für einige Verteilungssubsysteme nicht konvergiert, dies die Konvergenz des Übertragungssubsystems oder anderer Verteilungssubsysteme nicht beeinträchtigt, da deren Berechnung unabhängig erfolgt.

Ein alternativer Workflow kann verwendet werden, um die Berechnung des Übertragungs- und Verteilungssubsystems zu synchronisieren.

Das Ergebnis des Netzteilers sind Übertragungs- und Verteilungssubsysteme und Übergabepunkte, die diese verbinden.

Der TSSE-Algorithmus zur Zustandsschätzung des Übertragungssystems (TSSE) wird verwendet, um die aktuelle Netzsituation in einem Übertragungssubsystem abzuschätzen. Ein Übertragungsteilsystem zeichnet sich durch folgende Merkmale aus:
- Große Anzahl von Messeinrichtungen
- Redundante Messungen
- Beobachtbares Netzwerk
- Vermaschtes Netzwerk
Die TSSE wurde entwickelt, um die besten Schätzungen auf der Grundlage der vom SCADA-System (Supervisory Control and Data Acquisition) bereitgestellten Messungen zu liefern. Es verwendet eine Beobachtbarkeitsprüfung, um Subsystembereiche zu bestimmen, die zusätzliche (Pseudo-) Messinformationen benötigen, um korrekt geschätzt zu werden. In diesem Fall werden Werte verwendet, die anhand von Zeitplänen ermittelt werden.

In seinem Kern verwendet die TSSE einen Newton-Raphson-Algorithmus, um die komplexen Spannungen im Subsystem zu berechnen. Zu diesem Zweck wird ein Gleichungssystem erstellt, in dem jede Gleichung die Messung und ihre Auswirkungen auf die Spannungen im Subsystem darstellt. Eine Matrix-Darstellung kann wie folgt angegeben werden:

| | | | |
|---|---|---|---|
| Matrix mit Abhängigkeiten der Messwerte von den unterschiedlichen Spannungen | Spannungen | = | Messwerte |

Dieses Gleichungssystem wird von der TSSE verwendet, um Abweichungen zwischen den Messungen und der aktuellen Lösung zu minimieren. Dies erfolgt mit folgenden Schritten:
1. Initialisieren von Spannungen zu Startwerten
2. Matrix und Delta-Messvektor bestimmen
3. Gleichungssystem lösen, um die verschiedenen Spannungen zu aktualisieren.
4. Wenn Aktualisierungswerte kleiner als ein vorher festgelegter Schwellenwert sind, wird eine Lösung erhalten, ansonsten wird mit Schritt 2 fortgefahren.

Damit verschiedene Messungen unterschiedliche Auswirkungen auf die Lösung haben können (z. B. hat eine Leistungsmessung weniger Wirkung als eine Spannungsmessung), verwendet die TSSE Gewichtungsfaktoren, um die Auswirkungen der Messungen zu erhöhen oder zu verringern. Diese Gewichte werden mittels Standardabweichungswerten bestimmt, die beschreiben, wie genau die Messung ist.

Kurz gesagt verwendet die TSSE einen Newton-Raphson-Algorithmus mit einer Knotenspannungszustandsvariablen (Vektor), um ein Problem der minimalen quadratischen Optimierung zu lösen. Es können im Rahmen der vorliegenden Erfindung jedoch auch andere Algorithmen für eine TSSE oder eine DSSE eingesetzt und mit Vorteil mit dem beschriebenen Netzaufteilungsalgorithmus verwendet werden.

Der Algorithmus zur Schätzung des Verteilungssystems (DSSE) wird analog zum Vorgehen bei der TSSE formuliert. Es wird auch in der DSSE das Problem als Least-Mean-Square-Optimierungsproblem formuliert und mit einem Newton-Raphson-Algorithmus gelöst. Anstatt jedoch Knotenspannungen zu verwenden, werden Zweigströme als Zustandsvariablen verwendet. Darüber hinaus werden zur Sicherstellung der Beobachtbarkeit Pseudomessungen, z.B. für Lasten, als Fallback-Lösung verwendet. In diesem Fall werden Lastwerte aus historischen Daten und/oder Lastkurven skaliert. Im Algorithmus wird diesen Pseudomessungen weniger vertraut als echten SCADA-Messungen aus dem Feld (höheres Sigma).

Um Nullinjektionen und andere Randbedingungen effizient zu berechnen, wurde das Gleichungssystem um Lagrange-Multiplikatoren erweitert. Dieser Ansatz ist beispielsweise aus der Veröffentlichung "An efficient method to include equality constraints in branch current distribution system state estimation" von Muscas et al., EURASIP Journal on Advances in Signal Processing, 2015, bekannt. Für jedes Verteilungssubsystem kann die Berechnung des DSSE unabhängig voneinander durchgeführt werden. Daher können die Berechnungen parallelisiert werden, um die Leistung zu erhöhen.

In realen Systemen ist es weit verbreitet, dass einzelne Verteilungssubsystemberechnungen nicht konvergieren. Da sie zuvor durch den Netzteiler in einzelne unabhängige Teilsysteme aufgeteilt werden, hat dies keinen Einfluss auf den Rest des Systems, insbesondere nicht auf die Konvergenz des Übertragungsteilsystems. Diese Robustheit gegenüber der Nichtkonvergenz einzelner Verteilsubsysteme ist ein großer Vorteil des Netzteilers und der eingangs beschriebenen Kombination von Algorithmen.

Eine Synchronisation von Übertragungs- und Verteilungsberechnungen an den Übergabepunkten kann auf zwei Arten erfolgen:
1. Top-down-Ansatz: es wird zunächst das Übertragungsnetz berechnet, dann werden die Ergebnisse an den Übergabepunkten als Eingabe in Form von Pseudomessungen für die Berechnung des Teilsystems des Verteilnetzes benutzt.
   Dieser Ansatz ist am Schnellsten und für die meisten Anwendungsfälle ausreichend.
2. Iterieren der Berechnungen der Teilsysteme Übertragung und Verteilung, bis die Ergebnisdifferenz an den Übertragungspunkten unter einem vorher festgelegten Schwellenwert liegt.

Mit Bezug auf die Aggregierung von Niederspannungs-Messwerten (z.B. Nennspannung 400 V) und ggf. anderer Daten und deren Berücksichtigung im vorliegenden Verfahren ist festzustellen, dass diese Informationen bisher i.d.R. nicht für eine Zustandsschätzung des Gesamtnetzes berücksichtigt werden. Um diese Daten zu berücksichtigen, können diese aggregiert werden. Sie können dann als äquivalente Einspeisungen für ein Netzmodell verwendet werden (z.B. mit Nennspannungen von 10 kV oder 30 kV in Europa). Dabei können folgende Schritte verwendet werden:
1) Bereitstellen von Messwerten oder berechneten bzw. geschätzten Messwerten (basierend auf Referenzwerten, Lastkurven, historischen Werten, usw.).
2) Zusammenfassen in topologisch korrekter Weise (z.B. alle Messwerte eines Niederspannungsstrangs), um eine korrespondierende äquivalente Einspeisung zu bestimmen, wobei zusätzliche Informationen zur Art der Einspeisung oder Last weitergegeben werden (z.B. Photovoltaik, Wasserkraft, Windkraft, Art der Last, usw.).
3) Skalieren auf den aktuellen, ggf. gemessenen, Wert am Beginn des Einspeiserstrangs unter Berücksichtigung der vorgenannten Arten von Einspeisungen oder Lasten.
4) Verwenden der skalierten Werte als Pseudomesswerte für die Zustandsschätzung des Verteilnetzes.

Im Folgenden wird beschrieben, wie der Ansatz der Erfindung im Niederspannungsbereich verwendet werden kann.

Sobald die notwendigen Informationen wie z.B. statische und dynamische Daten über elektrische Parameter, Topologie, Stromzählerdaten, Echtzeit-Messdaten in ausreichender Qualität vorliegen, kann die eingangs beschriebene Berechnung von Hochspannungs-Übertragungsnetzen und Mittelspannungs-Verteilnetzen übertragen werden auf den Niederspannungsbereich. Dabei kann mittels des geschilderten Verfahrens zur Netzaufteilung erkannt werden, welche Teile des Gesamtnetzes Niederspannungsnetze sind. Diese können anschließend mit einem Verfahren zur Zustandsschätzung für Niederspannungsnetzes behandelt werden, wobei wahlweise deterministische Verfahren, wahrscheinlichkeitsbasierte verfahren oder Künstliche Intelligenz eingesetzt werden können.

Des Weiteren kann das Prinzip der Aufteilung des Gesamtnetzes in mehrere Spannungsebenen bzw. Teilnetze auch dahingehend angewendet werden, dass auf die jeweilige Spannungsebene optimierte Algorithmen für eine Leistungsflussberechnung eingesetzt werden. Beispielsweise kann im Verteilnetz ein Zweigstrom berechnet werden, da dieser Algorithmus lange radiale Strukturen auswerten kann.

Ebenso kann das aufgeteilte Gesamtnetz im Hinblick auf einen der folgenden Aspekte hin analysiert werden: Optimierter Leistungsfluss, Störungsanalyse, Fehlerorterkennung, Optimierter Redispatch.

In einer weiteren bevorzugten Ausführungsform des erfindungsgemäßen computerimplementierten Verfahrens wird für die Erkennung elektrischer Netzbereiche mindestens eine technische Randbedingung berücksichtigt, wobei die technische Randbedingung mindestens eine der folgenden Randbedingungen umfasst: minimale Anzahl von Kanten, mindestens ein Generator und mindestens eine Last.

In einer weiteren bevorzugten Ausführungsform des erfindungsgemäßen computerimplementierten Verfahrens wird der Netzzustand innerhalb einer festgelegten Zeitspanne aktualisiert, wobei vorher jeweils der Netzaufteilungsdatensatz aktualisiert wird. Dieser Aspekt ist ein wesentlicher Vorteil der Erfindung, weil ermöglicht wird, den Netzzustand jeweils basierend auf der jeweils aktuellen Topologie zu berechnen. Die festgelegte Zeitspanne ist beispielsweise eine Stunde, wobei die Aktualisierung z.B. mehrfach regelmäßig innerhalb der Stunde erfolgen kann. Bevorzugt erfolgt die Aktualisierung mindestens alle 10 min.

Ausgehend von bekannten Anordnungen für eine Netzanalyse stellt sich an die Erfindung ferner die Aufgabe, eine Anordnung anzugeben, mit dem auch bei einer dynamischen Veränderung der Netztopologie im elektrischen Energienetz eine Zustandsschätzung mit verbesserter Genauigkeit ermöglicht wird.

Die Erfindung löst diese Aufgabe durch eine Netzanalyseanordnung gemäß Anspruch 8. Bevorzugte Ausführungsformen ergeben sich aus den abhängigen Ansprüchen 9 bis 14, wobei sich sinngemäß die gleichen Vorteile wie eingangs für das erfindungsgemäße computerimplementierte Verfahren erläutert ergeben.

Ausgehend von dem bekannten Computerprogrammprodukten für eine Netzanalyse stellt sich an die Erfindung des Weiteren die Aufgabe, eine Computerprogrammprodukt anzugeben, mit dem auch bei einer dynamischen Veränderung der Netztopologie im elektrischen Energienetz eine Zustandsschätzung mit verbesserter Genauigkeit ermöglicht wird.

Die Erfindung löst diese Aufgabe durch ein Computerprogrammprodukt gemäß Anspruch 15. Es ergeben sich sinngemäß die gleichen Vorteile wie eingangs für das erfindungsgemäße computerimplementierte Verfahren erläutert.

Zur besseren Erläuterung der Erfindung zeigen in schematischer Darstellung die
- Figur 1: ein Ausführungsbeispiel für ein elektrisches Energienetz, und
- Figur 2: ein Ausführungsbeispiel für ein erfindungsgemäß aufgeteiltes Energienetz.

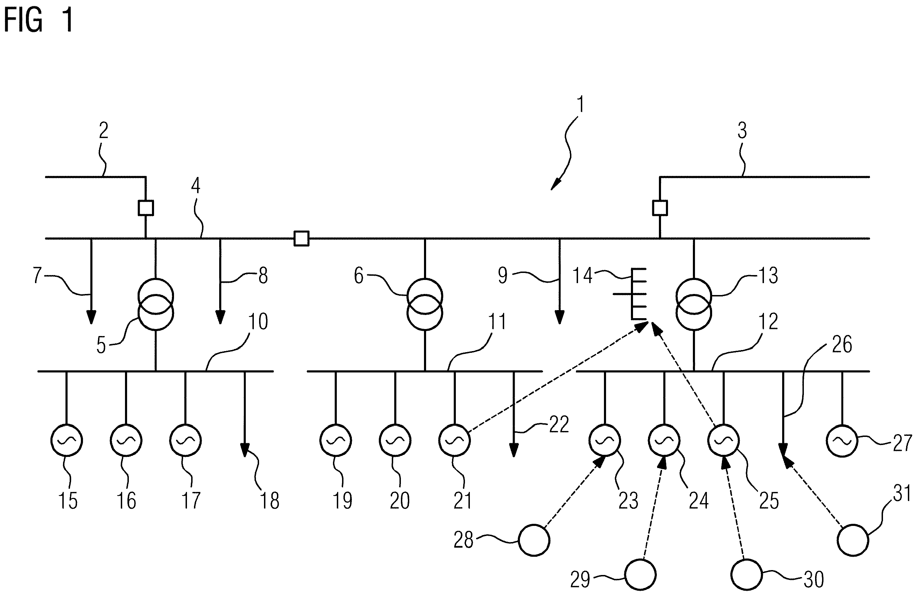

Die Figur 1 zeigt ein erstes Ausführungsbeispiel für ein elektrisches Energienetz 1. Figur 1 zeigt drei Abgänge (Transformatoren) vom Mittelspannungsnetz zum Niederspannungsnetz. Die Abbildung illustriert die mögliche Aggregation der Niederspannungsdaten für die Verwendung in der Verteilnetzzustandsschätzung. Mittelpannungsleitungen 2, 3 sind mit einem Mittelspannungsnetz 4 mit einer Nennspannung von 10 kV bis 30 kV verbunden.

Es wird kein komplettes Netz dargestellt, da keine Hochspannungsleitungen vorhanden sind. Die radialen Feeder in der Mittelspannung gehen von einer Station zur nächsten (die Leitungen 2,3 sind an die jeweils nächste Station angebunden). Beispielhaft ist solche Station mit Ihren Abgängen zur Niederspannung detaillierter dargestellt.

Das Mittelspannungsnetz 4 hat mehrere Abgänge 7, 8, 9. Am Abgang 7 kann eine Last gemessen werden. Am Abgang 8 wird eine fiktive Last angenommen. Gleiches gilt für den Abgang 9, bei dem jedoch mehrere bekannte Faktoren 14 aggregiert worden sind: eine Last, eine Photovoltaikeinspeisung, eine Windkrafteinspeisung, und eine Wasserkrafteinspeisung. An einem weiteren Abgang findet sich ein Transformator 5, der auf eine Niederspannungsebene 10 mit einer Nennspannung von 0,4 kV führt. An dem Niederspannungsnetz 10 sind eine Photovoltaikanlage 15, eine Windkraftanlage 16, eine Wasserkraftanlage 17 und eine Last 18 angeschlossen. An einem weiteren Abgang findet sich ein Transformator 6, der auf ein Niederspannungsnetz bzw. Teilnetz 11 führt. An dieses Niederspannungsnetz 11 sind wiederum eine Photovoltaikanlage 19, eine Windkraftanlage 20, eine Wasserkraftanlage 21 und eine Last 22 angeschlossen. An einem weiteren Abgang 13 ist ein Niederspannungsnetz 12 angeschlossen, an das eine Photovoltaikanlage 23, eine Windkraftanlage 24, eine Wasserkraftanlage 25 und eine Last 26 sowie weitere nicht näher spezifizierte Erzeuger oder Verbraucher 27 angeschlossen sind. Für die Bestimmung der elektrischen Parameter der Einspeiser bzw. der Lasten 23 bis 26 werden Engpassleistungen bzw. Referenzmessungen 28, 29, 30, 31 berücksichtigt.

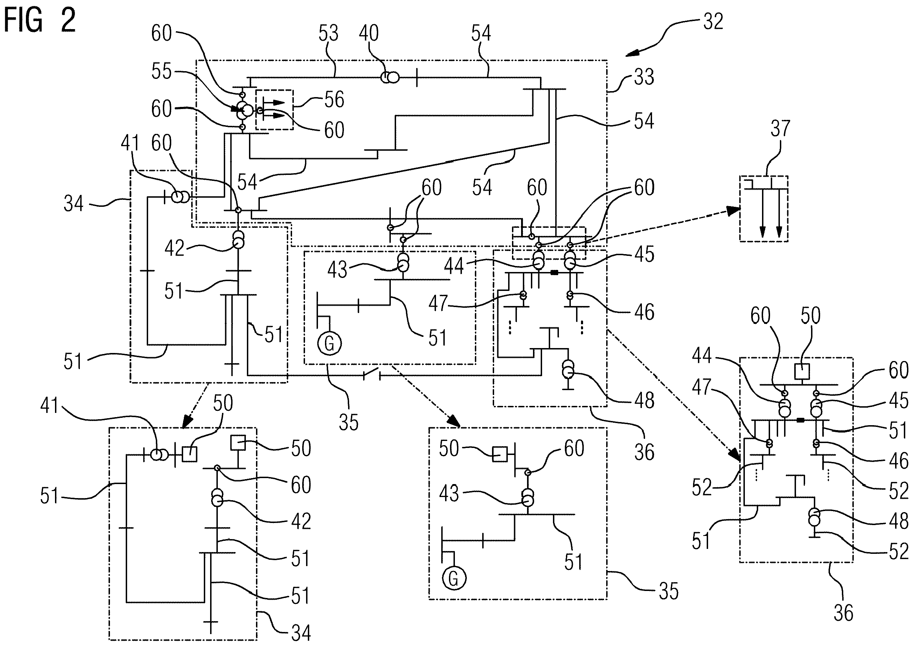

Die Figur 2 zeigt ein Ausführungsbeispiel für ein erfindungsgemäß aufgeteiltes Energienetz 32. Ein Energieübertragungsnetz 53 der Hochspannungsebene mit einer Nennspannung von 220 kV bis 400 kV ist über Transformatoren 40, 55 mit einem Hochspannungsnetz 54 mit einer Nennspannung von 110 kV verbunden. Messeinrichtungen sind jeweils mit dem Bezugszeichen 60 gekennzeichnet. Das Hochspannungsnetz 53 kann am Anschlusspunkt 56 mit einem weiteren Hochspannungsnetz verbunden sein, was eine Berechnung über für Übertragungsnetze optimierte Zustandsschätzer erfordern würde. Ist am Anschlusspunkt 56 jedoch auf eine niedere Spannungsebene geschaltet, so wäre im weiteren Verlauf dieser Teil einem Verteilnetz zuzuschlagen. Erfindungsgemäß wird mit dem vorgeschlagenen Algorithmus das vorliegende Energienetz 32 in Teilnetze aufgeteilt. Dabei wird zunächst aus den Hochspannungsnetzen 53, 54 ein Übertragungsnetz 33 isoliert. Dieses kann mit geeigneten Übertragungsnetzalgorithmen einer Zustandsschätzung zugeführt werden. Über Transformatoren 41, 42, 43, 44, 45 ist das Übertragungsnetz 33 mit einer Reihe von Mittelspannungsnetzen 51 verbunden. Diese Mittelspannungsnetze werden beispielsweise mit 35 kV oder mit 10 kV betrieben. Unter Berücksichtigung der Topologie bzw. geöffneter Schalterstellungen ist es möglich, erfindungsgemäß das vorliegende Mittelspannungsnetz 51 in mehrere Subnetze 34, 35, 36 aufzuteilen und diese getrennt weiter zu berechnen. Beispielsweise wird das Verteilnetz-Subsystem 34 separat berechnet, sodass an den Einspeisepunkten 50 bzw. den Kontaktpunkten zum übergeordneten Übertragungsnetz 33 äquivalente Einspeisungen für den auf den Übertragungsnetzebene verwendeten Zustandsschätzer übermittelt werden können. In gleicher Weise wird das Verteilnetz-Subsystem 35 behandelt. Bei dem Verteilnetz-Subsystem 36 ist weiterhin erkennbar, dass unterhalb der Mittelspannungsebene 51 über die Transformatoren 46, 47, 48 ein Niederspannungsnetz 52 angeschlossen ist. Dieses weist eine Nennspannung von z.B. 0,4 kV auf.

Die Grundidee dieser Netzauftrennung besteht darin, die Teilnetze separat einer Zustandsschätzung zuzuführen und die Ergebnisse als äquivalente Einspeisungen am jeweiligen Transformator einzusetzen. Das Netzwerk unterhalb eines Transformators, d. h. in der untergeordneten Spannungsebene, wird dabei als ein einheitliches Subnetz aufgefasst, wenn im weiteren Verlauf der Topologie des Netzes zwei Transformatoren in einem Punkt eine Verbindung herstellen. Dies kann beispielsweise über eine gemeinsame Sammelschiene oder über eine andere Verbindung auf der Niederspannungsebene oder der Mittelspannungsebene erfolgen.

## Patentansprüche

1. Computerimplementiertes Verfahren für eine Netzanalyse eines elektrischen Energienetzes (1,32) mit mindestens einem Energieübertragungsnetz und mindestens einem Energieverteilungsnetz (35,51), wobei das mindestens eine Energieübertragungsnetz (53,54) eine höhere Nennspannung als das mindestens eine Energieverteilungsnetz (35,51) aufweist, mit den Schritten:
Bestimmen eines Netzzustands mittels einer Netzanalyseanordnung unter Berücksichtigung eines Netzaufteilungsdatensatzes, wobei der Netzaufteilungsdatensatz eine Zuordnung von Leitungen und/oder Betriebsmitteln zu dem mindestens einen Energieübertragungsnetz (53,54) und dem mindestens einen Energieverteilungsnetz (35,51) bereitstellt,
**dadurch gekennzeichnet, dass**
vor der Bestimmung des Netzzustands mittels einer Netzaufteilungseinrichtung anhand eines Topologiedatensatzes des elektrischen Energienetzes (1,32) eine Aufteilung des elektrischen Energienetzes in das mindestens eine Energieübertragungsnetz (53,54) und das mindestens eine Energieverteilungsnetz (35,51) in dem Netzaufteilungsdatensatz bereitgestellt wird.

2. Verfahren nach Anspruch 1, **dadurch gekennzeichnet, dass** der Netzzustand mindestens eine der folgenden Informationen über das Energienetz bereitstellt: Zustandsschätzung, Leistungsflüsse, Optimierte Leistungsflüsse, Analyse von Störungen und Gegenmaßnahmen, Erkennung von Fehlerorten im Energienetz.

3. Verfahren nach Anspruch 1 oder 2, **dadurch gekennzeichnet, dass** der Topologiedatensatz das elektrische Energienetz (1,32) anhand von Kanten als elektrischen Leitungen und Knoten als Generatoren und/oder Lasten beschreibt.

4. Verfahren nach Anspruch 3, **dadurch gekennzeichnet, dass** mittels der Netzaufteilungseinrichtung anhand des Topologiedatensatzes elektrische Netzbereiche im Energienetz derart erkannt werden, dass
für jeden elektrischen Netzbereich Leitungen und/oder Lasten und/oder Generatoren, deren Nennspannung unterhalb eines vorher festgelegten Schwellenwertes für die Nennspannung liegen, einem vorläufigen Energieverteilungsnetz zugeordnet werden, und Leitungen und/oder Lasten und/oder Generatoren, deren Nennspannung oberhalb des vorher festgelegten Schwellenwertes für die Nennspannung liegen, einem vorläufigen Energieübertragungsnetz zugeordnet werden.

5. Verfahren nach Anspruch 4, **dadurch gekennzeichnet, dass** das vorläufige Energieverteilungsnetz anhand mindestens eines Bewertungskriteriums als Energieverteilungsnetz verifiziert wird, wobei das mindestens eine Bewertungskriterium mindestens eines der folgenden Bewertungskriterien umfasst: Anzahl der Sammelschienen, Anzahl der Lasten, Anzahl sequenzieller Zweige bzw. Äste, minimaler elektrischer Widerstand von Ästen im vorläufigen Energieverteilungsnetz, Anzahl radialer Äste, elektrische Nennspannung, Anzahl vorliegender Messungen.

6. Verfahren nach Anspruch 4 oder 5, **dadurch gekennzeichnet, dass** für die Erkennung elektrischer Netzbereiche mindestens eine technische Randbedingung berücksichtigt wird, wobei die technische Randbedingung mindestens eine der folgenden Randbedingungen umfasst: minimale Anzahl von Kanten, mindestens ein Generator und mindestens eine Last.

7. Verfahren nach einem der vorhergehenden Ansprüche, **dadurch gekennzeichnet, dass** der Netzzustand innerhalb einer festgelegten Zeitspanne aktualisiert wird, wobei vorher jeweils der Netzaufteilungsdatensatz aktualisiert wird.

8. Netzanalyseanordnung für eine Netzanalyse eines elektrischen Energienetzes (1,32) mit mindestens einem Energieübertragungsnetz und mindestens einem Energieverteilungsnetz (35,51), wobei das mindestens eine Energieübertragungsnetz (53,54) eine höhere Nennspannung als das mindestens eine Energieverteilungsnetz (35,51) aufweist, aufweisend:
eine Zustandsschätzungseinrichtung für ein Bestimmen eines Netzzustands unter Berücksichtigung eines Netzaufteilungsdatensatzes, wobei der Netzaufteilungsdatensatz eine Zuordnung von Leitungen und/oder Betriebsmitteln zu dem mindestens einen Energieübertragungsnetz (53,54) und dem mindestens einen Energieverteilungsnetz (35,51) bereitstellt,
**dadurch gekennzeichnet, dass**
eine Netzaufteilungseinrichtung ausgebildet ist, vor der Bestimmung des Netzzustands anhand eines Topologiedatensatzes des elektrischen Energienetzes eine Aufteilung des elektrischen Energienetzes (1,32) in das mindestens eine Energieübertragungsnetz (53,54) und das mindestens eine Energieverteilungsnetz (35,51) in dem Netzaufteilungsdatensatz bereitzustellen.

9. Netzanalyseanordnung nach Anspruch 8,
**dadurch gekennzeichnet, dass**
die Zustandsschätzungseinrichtung ausgebildet ist, einen Netzzustand bereitzustellen, der mindestens eine der folgenden Informationen über das Energienetz bereitstellt: Zustandsschätzung, Leistungsflüsse, Optimierte Leistungsflüsse, Analyse von Störungen und Gegenmaßnahmen, Erkennung von Fehlerorten im Energienetz.

10. Netzanalyseanordnung nach Anspruch 8 oder 9, **dadurch gekennzeichnet, dass** der Topologiedatensatz das elektrische Energienetz (1,32) anhand von Kanten als elektrische Leitungen und Knoten als Generatoren und/oder Lasten beschreibt.

11. Netzanalyseanordnung nach Anspruch 10, **dadurch gekennzeichnet, dass** die Netzaufteilungseinrichtung ausgebildet ist, anhand des Topologiedatensatzes elektrische Netzbereiche im Energienetz derart zu erkennen, dass für jeden elektrischen Netzbereich Leitungen und/oder Lasten und/oder Generatoren, deren Nennspannung unterhalb eines vorher festgelegten Schwellenwertes für die Nennspannung liegt, einem vorläufigen Energieverteilungsnetz zugeordnet werden, und Leitungen und/oder Lasten und/oder Generatoren, deren Nennspannung oberhalb des vorher festgelegten Schwellenwertes für die Nennspannung liegt, einem vorläufigen Energieübertragungsnetz zugeordnet werden.

12. Netzanalyseanordnung nach Anspruch 11, **dadurch**
**gekennzeichnet, dass**
die Netzaufteilungseinrichtung ausgebildet ist,
das vorläufige Energieverteilungsnetz anhand mindestens eines Bewertungskriteriums als Energieverteilungsnetz zu verifizieren, wobei das mindestens eine Bewertungskriterium mindestens eines der folgenden Bewertungskriterien umfasst: Anzahl der Sammelschienen, Anzahl der Lasten, Anzahl sequenzieller Zweige bzw. Äste, minimaler elektrischer Widerstand von Ästen im vorläufigen Energieverteilungsnetz, Anzahl radialer Äste, elektrische Nennspannung, Anzahl vorliegender Messungen.

13. Netzanalyseanordnung nach Anspruch 11 oder 12, **dadurch gekennzeichnet, dass**
die Netzaufteilungseinrichtung ausgebildet ist,
für die Erkennung elektrischer Netzbereiche mindestens eine technische Randbedingung zu berücksichtigen, wobei die technische Randbedingung mindestens eine der folgenden Randbedingungen umfasst: minimale Anzahl von Kanten, mindestens ein Generator und mindestens eine Last.

14. Netzanalyseanordnung nach einem der vorhergehenden Ansprüche, **dadurch gekennzeichnet, dass** der Netzzustand innerhalb einer festgelegten Zeitspanne aktualisiert wird, wobei vorher jeweils der Netzaufteilungsdatensatz aktualisiert wird.

15. Computerprogrammprodukt, umfassend Befehle,
die bei der Ausführung des Programms durch einen Computer diesen veranlassen, ein Verfahren gemäß einem der Ansprüche 1 bis 7 auszuführen.
